(19) Europäisches Patentamt / European Patent Office / Office européen des brevets

(11) **EP 1 974 816 A1**

(12) **EUROPEAN PATENT APPLICATION**

(43) Date of publication:
**01.10.2008 Bulletin 2008/40**

(51) Int Cl.:
***B01L 3/00*** *(2006.01)*   ***B01L 7/00*** *(2006.01)*

(21) Application number: **07104822.7**

(22) Date of filing: **23.03.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Koninklijke Philips Electronics N.V.
5621 BA Eindhoven (NL)**

(72) Inventor: **The designation of the inventor has not
yet been filed**

(74) Representative: **Damen, Daniel Martijn et al
Philips
Intellectual Property & Standards
P.O. Box 220
5600 AE Eindhoven (NL)**

(54) **Integrated microfluidic device with integrated circuit**

(57)   An integrated microfluidic device has a plurality of chambers (11-MN) on a substrate for handling fluids, a chamber circuit (R, Rs, D1, T1, T2, T3, T4) integrated on the substrate for switching signals related to that chamber, and an integrated circuit chip bonded to the substrate, the integrated circuit chip having signal processing circuitry (controller) coupled to the chamber circuit. Lower performance switching functions can be carried out on chamber circuitry implemented in low temperature poly silicon, and higher performance signal processing functions can be carried out on the integrated circuit implemented in crystalline silicon. The substrate can be glass. A controller on the integrated circuit chip can control or read from many chamber circuits in a multiplexed manner, using active matrix techniques. The chambers can be used for PCR and the chamber circuits used for temperature sensing (Rs, D1) and heating (R).

# FIG. 5

EP 1 974 816 A1

**Description**

FIELD OF THE INVENTION

This invention relates to integrated microfluidic devices having a substrate, and a plurality of chambers on the substrate for handling fluids.

BACKGROUND OF THE INVENTION

Micro-fluidic devices are at the heart of most biochip technologies, being used for both the preparation of fluidic samples and their subsequent analysis. The samples may e.g. be blood based. As will be appreciated by those in the art, the sample solution may comprise any number of things, including, but not limited to, bodily fluids like blood, urine, serum, lymph, saliva, anal and vaginal secretions, perspiration and semen of virtually any organism: Mammalian samples are preferred and human samples are particularly preferred; environmental samples (e.g. air, agricultural, water and soil samples); biological warfare agent samples; research samples (i.e. in the case of nucleic acids, the sample may be the products of an amplification reaction, including both target an signal amplification); purified samples, such as purified genomic DNA, RNA, proteins etc.; unpurified samples and samples containing (parts of) cells, bacteria, virusses, parasites or funghi.

As it is well known in the art, virtually any experimental manipulation may have been done on the sample. In general, the terms "biochip" or "Lab-on-a-Chip" or alike, refer to systems, comprising at least one micro-fluidic component or biosensor, that regulate, transport, mix and store minute quantities of fluids rapidly and reliably to carry out desired physical, chemical and biochemical reactions in larger numbers. These devices offer the possibility of human health assessment, genetic screening and pathogen detection. In addition, these devices have many other applications for manipulation and/or analysis of non-biological samples. Biochip devices are already being used to carry out a sequence of tasks, e.g. cell lyses, material extraction, washing, sample amplification, analysis etc. They are progressively used to carry out several preparation and analysis tasks in parallel, e.g. detection of several bacterial diseases. As such, micro-fluidic devices and biochips already contain a multiplicity of components, the number of which will only increase as the devices become more effective and more versatile.

Many of the components are electrical components used to sense or modify a property of the sample or fluid, such as heating elements, pumping elements, valves etc., and are frequently realized by direct fabrication of thin film electronics on the substrate of the device. Suitable properties that can be sensed or modified include, but are not limited to, temperature; flow rate or velocity; pressure, fluid, sample or analyte presence or absence, concentration, amount, mobility, or distribution; an optical characteristic; a magnetic characteristic; an electrical characteristic; electric field strength, disposition, or polarity.

Polymerase Chain Reaction (PCR) is a method commonly used for the amplification of DNA. The technique requires cycled temperature steps that must be temperature accurate to enable high efficiency amplification. Current systems for PCR are both bulky and time consuming when considered in the lab environment, therefore the move to a miniaturized thermal cycler, which enables integration in a lab-on-a-chip, is very attractive. It is also desirable to have multiple chambers running independent (real-time) PCR processes on the same chip.

Besides for PCR, in numerous biotechnological applications there is a need for a technology that allows cost-effective fabrication of a (bio)chemical processing module, comprising an array of temperature controlled reaction compartments that can be processed in parallel and independently, on a (disposable) biochip or alike system, without the need for a large device periphery to locate the I/O pins.

To enable accurate temperatures to be achieved temperature control systems must be used.

It is known to investigate plastics for a disposable biochip, e.g., PCR thermal cycler. Bio- and temperature compatible plastics (e.g., polypropylene and polycarbonate, etc.) are popular materials used in macro-PCR thermal cyclers in a format of vessel/tube. Such plastics typically show worse thermal conductivity compared with silicon and glass, which might result in slow thermal response and bad temperature uniformity in the fluids. Nevertheless, its low cost, in materials and processing (mold replication), makes it promising for mass production of disposable PCR chips.

Shown in United States Application 20030008286 is a thermal cycler for multi-chamber independent thermal control, using low-cost reusable or disposable miniaturized reaction chips. The apparatus is made up of a chip of plastic, or similar low cost material, containing an array of reaction chambers. After all chambers have been filled with reagents, the chip is pressed up against a substrate, typically a printed circuit board, there being a set of temperature balancing blocks between the chip and the substrate. Individually controlled heaters and sensors located between the blocks and the substrate allow each chamber to follow its own individual thermal protocol while being well thermally isolated from all other chambers and the substrate. The latter rests on a large heat sink to avoid thermal drift over time.

US patent 6632400 shows that as polymer and glass substrates are the most useful substrates for microfluidic applications it is desirable to integrate polymer or glass substrates with electronics components. To have electronics components in close proximity with microfluidic components, a microfluidic system should have its microfluidic components, ideally formed of polymer or glass, integrated with an electronics component.

This is implemented by having a micro fluidic channel bonded to an electronics component such as a prefabricated integrated circuit chip that includes signal processing and/or process control circuits that provide a substantially higher degree of functionality than a mere photodiode. The integrated circuit chip is preferably bonded to the microfluidic component using a flip chip type process, common to the integrated circuit industry.

SUMMARY OF THE INVENTION:

An object of the invention is to provide improved integrated microfluidic devices having a substrate, and a plurality of chambers on the substrate for handling fluids and methods of manufacturing and operating the same. According to a first aspect, the invention provides:

An integrated microfluidic device having a substrate, a plurality of chambers on the substrate for handling fluids, a chamber circuit integrated on the substrate local to an associated one of the chambers for switching signals related to that chamber, and an integrated circuit chip bonded to the substrate, the integrated circuit chip having signal processing circuitry coupled to the chamber circuit.

Integrating such chamber circuits for switching on the substrate, and having a separate chip for signal processing can help enable an appropriate separation of functions to improve the trade off between cost and performance of the device overall. Lower performance switching functions can be carried out on chamber circuitry, and higher performance signal processing functions can be carried out on the integrated circuit. Signal processing can encompass processing sensed signals, and generating control signals for example.

Any features may be added to these features. Some such added features are described and claimed in dependent claims. The substrate can comprise a transparent substrate such as a glass substrate which will be lower cost and provides better properties than some other materials. Other such additional features are the chamber circuit comprising thin film transistors, which can be lower cost for large areas, or the chamber circuit comprising polycrystalline, microcrystalline, nanocrystalline, or amorphous semiconductor material such as low temperature poly silicon, for low cost, and the integrated circuit chip comprising a monocrystalline semiconductor material such as monocrystalline silicon, for better performance. Another such additional feature is a multiplexed line for coupling the chamber circuits to the signal processing circuitry, the signal processing circuitry being arranged to process signals from or for the chambers in a multiplexed manner. This can enable more chambers without too many contacts or lines. The chamber circuit can comprise temperature sensing circuitry for sensing temperature of the fluid in the chamber, an electrical heating and/or cooling element for heating and/or cooling fluid in the chamber and switching circuitry for controlling the heating and/or cooling element.

The integrated circuit having a controller arranged to send control signals to the switching circuitry according to readings from the temperature sensing circuitry, to provide better individual control of temperature.

The device can have more than one of the integrated circuit chips, each coupled to one or more chamber circuit. A main controller integrated circuit can be provided, coupled to the integrated circuit chips.

The device can comprise a two-dimensional array of the chambers, and associated chamber circuits comprising an active matrix of switches, select lines and control lines such that each of the switches is controlled by one select line and one control line.

Other such additional features are a row driver for activating different ones of the select lines in a sequence, one or more multiplexed read lines, and an active matrix of switches for controlling which chamber circuits are coupled to the read lines. A memory device can be provided for storing a control signal supplied to one of the switches.

Other aspects of the invention include methods of manufacturing such devices, or methods of using such devices for handling fluids.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

BRIEF DESCRIPTION OF THE DRAWINGS:

How the present invention may be put into effect will now be described by way of example with reference to the appended drawings, in which:

Fig. 1 shows multiplexed PCR - LTPS only IC in accordance with an embodiment of the present invention.
Fig. 2 shows multiplexed PCR with a single IC in accordance with an embodiment of the present invention.
Fig. 3 shows multiple PCR with no multiplexing - single IC in accordance with an embodiment of the present invention.

Fig. 4 shows multiplexed PCR - multiple ICs in accordance with an embodiment of the present invention.

Fig. 5 shows multiplexed PCR - locally multiplexed ICs in accordance with an embodiment of the present invention.

Fig. 6 shows a heater sensor arrangement in accordance with an embodiment of the present invention.

Fig. 7 shows a heater sensor arrangement in accordance with an embodiment of the present invention.

Fig. 8 shows a heater sensor arrangement in accordance with an embodiment of the present invention.

Fig. 9 shows a heater sensor arrangement in accordance with an embodiment of the present invention.

Fig. 10 shows a heater/resistive sensor with DRAM and SRAM in accordance with an embodiment of the present invention.

Fig. 11 shows a heater/resistive sensor with DRAM and SRAM in accordance with an embodiment of the present invention.

Fig. 12 shows a heater + resistive sensor with DRAM and SRAM in accordance with an embodiment of the present invention.

Fig. 13 shows a heater + resistive sensor with DRAM and SRAM in accordance with an embodiment of the present invention.

Fig. 14 shows a TFT heater + resistive sensor with DRAM and SRAM in accordance with an embodiment of the present invention.

Fig. 15 shows a TFT heater + resistive sensor with DRAM and SRAM in accordance with an embodiment of the present invention.

Fig. 16 shows a heater + diode sensor with DRAM and SRAM in accordance with an embodiment of the present invention.

Fig. 17 shows a heater + diode sensor with DRAM and SRAM in accordance with an embodiment of the present invention.

Fig. 18 shows a heater + double diode sensor with DRAM and SRAM in accordance with an embodiment of the present invention.

Fig. 19 shows a heater + double diode sensor with DRAM and SRAM in accordance with an embodiment of the present invention.

Fig. 20 shows a heater + reverse biased diode sensor with DRAM and SRAM in accordance with an embodiment of the present invention.

Fig. 21 shows a heater + reverse biased diode sensor with DRAM and SRAM in accordance with an embodiment of the present invention.

Fig. 22 shows selection of rows of a PCR array in accordance with an embodiment of the present invention.

Fig. 23 shows a sensor with ADC in accordance with an embodiment of the present invention.

Fig. 24 shows a digital heater in accordance with an embodiment of the present invention.

Fig. 25 is a schematic of a digital control system for an array of PCR chambers in accordance with an embodiment of the present invention.

Fig. 26 is a timing diagram for use with embodiments of the present invention.

Fig. 27 shows PCR temperature cycles.

Fig. 28 shows PCR temperature cycles for reduced peak power consumption in accordance with an embodiment of the present invention.

Fig. 29 shows the offset phases of PCR chambers in accordance with an embodiment of the present invention.

Fig. 30 shows the temperature phase length modifications in accordance with an embodiment of the present invention.

Fig. 31 shows a temperature profile for PCR in accordance with an embodiment of the present invention.

Fig. 32 shows local heating and sensing in a PCR Chamber in accordance with an embodiment of the present invention.

Fig. 33 shows a local heater element in accordance with an embodiment of the present invention.

Fig. 34 shows a system architecture in accordance with an embodiment of the present invention.

Fig. 35 shows circular chambers with local heating control in accordance with an embodiment of the present invention.

Fig. 36 shows issues with TFT only heaters in accordance with an embodiment of the present invention.

Fig. 37 shows TFT only heater circuit with sensor in accordance with an embodiment of the present invention.

Fig. 38 shows a particular embodiment of a storage means that may be used to hold the gate of the heater TFT either high or low.

DETAILED DESCRIPTION OF EMBODIMENTS:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein. Introduction to embodiments.

As microfluidic devices for molecular diagnostics are in many cases expected to be completely or in-part disposable, there is more incentive to make them using a low cost technology. Low Temperature Poly-crystalline Silicon (LTPS) processing enables this but has certain disadvantages when compared to the use of crystalline silicon, e.g. monocrystalline silicon. Other technologies can be used such as those based on amorphous silicon (aSi:H), or micro- or nanocrystalline silicon that can be made using a process similar to aSI:H but with altered process conditions to generate micro- or nano-sized particles. Also other semiconductor systems may be used if these are adaptable to similar low cost processing. For example, in low temperature poly-crystalline silicon (LTPS) processing, amorphous silicon is deposited onto a substrate, preferably a transparent substrate such as made from glass, and lasers, or other low temperature energy sources, are used to crystallize the amorphous silicon into a more conductive state known as poly-crystalline silicon (p-Si). This poly-crystalline silicon layer can be patterned through photolithography to make a thin-film transistor (TFT) plane. Electronic circuits such as integrated circuits (ICs) can also be integrated into this plane, for better form factor and higher quality. The TFTs have up to a 100 times faster mobility when formed in poly-crystalline silicon than in amorphous silicon. However, the transistors (i.e. Thin-Film Transistors or TFTs) have a lower mobility than monocrystalline silicon devices and are also non-uniform i.e. the characteristics of two transistors close to one another will be different so that 'matched circuits' commonly used in monocrystalline technologies are not possible. Some embodiments of the present invention show ways to overcome this in an integrated miniaturized temperature controller, such as can be used for PCR. Low cost is particularly relevant when there are multiple independent chambers such as PCR chambers on a chip as the TFT non-uniformities will cause random differences between the temperature control of the different PCR processes and this will cause differences in efficiencies, quantification (in the case of Q-PCR) or even failure of the process.

Some embodiments show multiplexed arrays of chambers such as PCR chambers which can be temperature controlled using heaters and/or coolers and sensors at each chamber. The sensors can be - selected and read periodically and therefore controlled by a single integrated circuit (IC) such as a single silicon IC that can be bonded to the substrate, preferably transparent substrate such as glass. The IC may be made using a high quality processing technique such as based on monocrystalline silicon or based on other high quality semiconductor processing techniques using other semiconductor systems, e.g. using Ge or Si and Ge or GaAs semiconductors. Notably the critical and complex controller component can be made in a high quality semiconductor, e.g. a monocrystalline silicon process on a small die enabling a low cost high performance system.

Hence in accordance with one aspect of the present invention, a transparent substrate such as a glass substrate using LTPS technology can be used to heat and/or cool and sense the temperature of an array of biological/(bio)chemical (e.g. PCR) chambers whilst an IC (e.g. bonded to the glass substrate) performs the temperature control of multiple chambers, e.g. either some or all of the chambers. Notable in some embodiments described is the separation of functions between the low cost large area LTPS technology and the high performance small area silicon technology that enables an overall low cost high performance system.

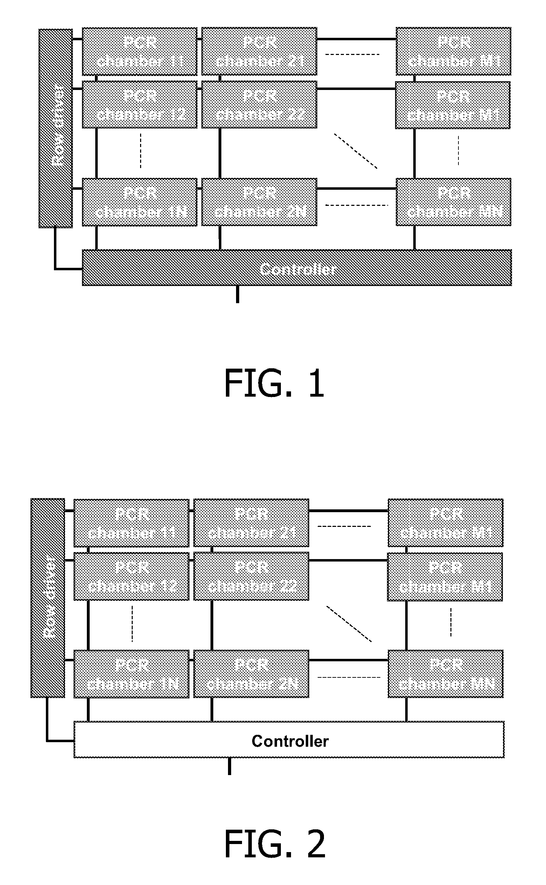

Figs. 1-5 Top level System Architectures

A number of multiplexed microfluidic systems e.g. PCR systems are shown in Figs. 1-5 which will be used in many of the embodiments of the present invention as detailed later. It is desirable to have few inputs to the system to enable a low interconnect count to the microfluidic system, e.g. PCR system, resulting in a higher yield and reliability. The parts implemented in integrated circuits (ICs), e.g. monocrystalline silicon or other semiconductor technologies, are shown as light colored. They can be bonded to an insulating substrate, especially a transparent substrate such as a glass LTPS substrate using techniques known, e.g. from the display industry. Other parts implemented as circuitry using LTPS, are shown as functional blocks in light grey. Figs. 1-5 show examples of a range of architectures that can be envisaged for such a system. In Fig. 1 there is shown an LTPS only system. This Fig. shows an example of a microfluidic system having chambers on a substrate for handling fluids. In this case they are PCR chambers and arranged in N rows and M columns. Each chamber is labeled with two digits, a first being a column number and a second is a row number. Although not shown, the chambers have microfluidic components such as pipes, valves mixers and so on, and chamber circuits integrated on the substrate. A matrix of select lines is shown, vertically and horizontally although an array in Cartesian co-ordinates is not essential. The geometry of the array could be polar, with radial and circumferential select lines, for example. Such select lines will be described as "logically arranged in rows and columns" to indicate that the logical arrangement is common but that the physical arrangement may differ from rows and columns. All that is required is that each chamber is addressable individually , e.g. at an intersection of a row and a column line. A row driver provides select signals to select a given one of the rows. A controller provides a column select function and writes to or reads from a selected chamber circuit. Rows and columns are interchangeable. Hence the row driver and the controller co-operate together to provide a means for selecting an individual chamber for control purposes. If appropriate, the controller can access multiple columns in parallel. The controller may be adapted to carry out sensing signal processing and/or multiplexed control of individual chambers.

- The chambers can contain for example sensing, heating and/or analog or digital memory.
- Each row of chambers can be addressed in turn using the integrated row driver so that a read of the sensor and a write to the heater can be made.
- The controller can be implemented as a microprocessor that performs the control function. Its time can be multiplexed between the columns of the array in accordance with a timing schedule. It can be integrated into the LTPS either in the LPTS technology or in any technology, e.g. in monocrystalline silicon.
- The controller can also have memory and a communication interface such as a parallel or serial interface to the outside world.

The row select lines and column read or write lines form a matrix. In principle the matrix can be passive or active. In a passive matrix, the selected chamber component or circuit at the crossover of the lines is activated by the select lines and is de-activated as soon as another component or circuit is selected. In an active matrix, each chamber has local switching circuitry which can be controlled by the select lines, to activate the chamber and leave it active while other circuits are selected.

In an active matrix, the chamber circuit has a switching means connected to a read or write line and to a row select line to ensure that all chambers can be driven independently. The chamber may have any electronic device e.g. a heater element and/or cooling element, a pumping element, a valve, a sensing component etc. being driven by either a voltage or a current signal. It is to be understood that the examples are not to be construed in a limiting sense. Activating a chamber means changing its state e.g. by turning it from on to off, or vice versa or by changing its setting. It is also noted that the individual switching means may comprise a plurality of subcomponents comprising both active and/or passive electronic components. However, there is no requirement that all subcomponents are activated together.

The operation of the microfluidic device to independently control a single chamber component can be as follows:

- In the non-addressing state, all row select lines are set to a voltage where the switching elements are non-conducting. In this case, no chamber is activated.
- In order to activate a preselected chamber the row driver applies a select signal to the select line to which the preselected chamber is coupled. As a consequence all switching means connected to the same row select line are switched into a conducting state.
- A control signal generated by the controller, e.g. a voltage or a current is applied to the control line for the column where the preselected chamber is situated. The control signal is set to its desired level and is passed through the switching means to the chamber, causing the component to be activated.
- The control signals in all other columns are held at a level which will not change the state of the remaining components connected to the same row select line as the preselected chamber. In this example, they will remain un-activated.
- All other row select lines will be held in the non-select state, so that the other chambers connected to the same column line as the preselected chamber will not be activated because their associated switching means remain in a non-conducting state.
- After the preselected chamber is set into the desired state, the respective select line is unselected, returning all switching means into a non-conducting state, preventing any further change in the state of the preselected chamber.

The device will then remain in the non-addressed state until the following control signal causes a change in the state of any one of the chambers, at which point the above sequence of operation is repeated.

It is possible to sequentially control chambers in different rows by activating another row by using the row driver and applying a control signal to one or more columns in the array.

It is also possible to address the micro-fluidic device such that a chamber is only activated while the control signal is present. However, it can be advantageous to incorporate a memory device into the component whereby the control signal is remembered after the select period is completed. For the memory device a capacitor or a transistor based memory element is suitable. This makes it possible to have a multiplicity of components at any point across the array activated simultaneously. This option is not available in the passive system known in the prior art. Of course, if a memory device is available, a second control signal will explicitly be required to de-activate the component.

Preferably the device comprises chambers or cells and channels, most preferred being microfluidic channels, that connect one chamber or cell to at least one, or more preferred a plurality of, other chambers or cells. Optionally a valve is located between the chambers or cells. This enables the performance of a reaction with various steps in the device. In such an embodiment, fluids may be moved sequentially from one chamber or cell to another or alternatively many chambers or cells may be processed in parallel.

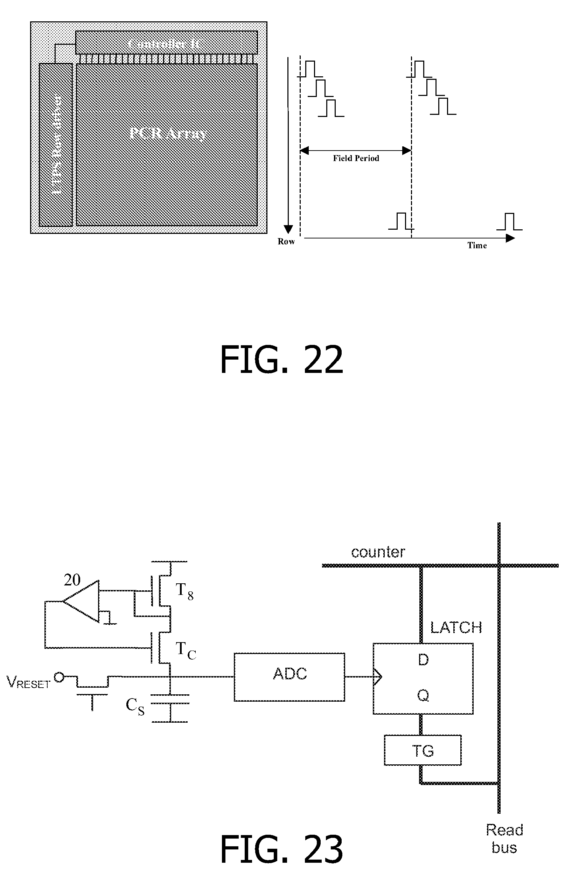

The arrangement shown in Fig. 1, all electronic components are implemented in LTPS in accordance with an embodiment of the present invention and this may function well, but LTPS is a poor quality silicon technology that may benefit from using monocrystalline silicon ICs to perform critical functions to improve system performance. Fig. 2 shows a another embodiment of the invention. In this case similar functions are shown to those in Fig. 1. The controller is shown schematically as a single IC, e.g. a monocrystalline IC. This IC is bonded onto the same substrate and coupled as before to control some or all of the chambers, e.g. PCR chambers in a multiplexed manner. A typical function for the LTPS implemented chamber circuits is to heat the samples and sense the temperature, though others can be envisaged. In this type of system, the controller can be adapted to multiplex on a row-by-row basis so that each chamber, e.g. PCR chamber receives a control after all other rows have received their controls. Hence, a control loop for the system is accessed intermittently. The row control is achieved by a row driver implemented using, for example, an LTPS shift register as will be described below with reference to Fig. 22.

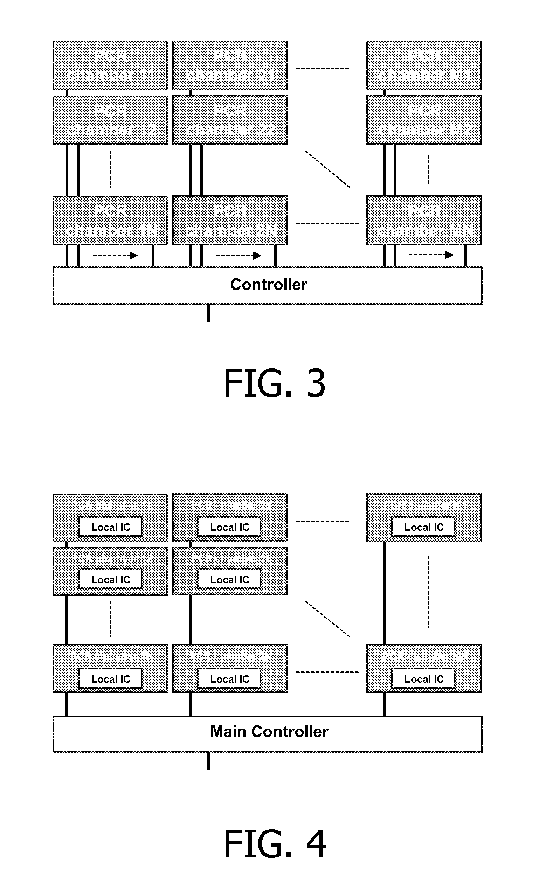

Alternatively, one monocrystalline IC could be used to control all PCR chambers without any multiplexing as shown schematically in Fig. 3. In this case similar functions are shown to those in Fig. 2. There is no row driver as the controller provides separate non-multiplexed select signals to all chambers. Hence, in this embodiment, the controller provides on its own the means to address and heat each chamber individually and to sense each chamber individually.

Alternatively, an IC can be placed at the location of every chamber, e.g. PCR chamber so that control can be exercised continuously. This is the embodiment shown in Fig. 4. In this case similar functions are shown to those in Fig. 3. This reduces the processing requirements for each IC, so simpler ICs can be provided, or more complex processing carried out, though having more ICs tends to increase cost. A main controller IC can be provided, coupled to all the ICs located at the chambers. This main controller IC can have a relatively simple function such as the delivery of data to or from the local ICs, and interfacing with external devices.

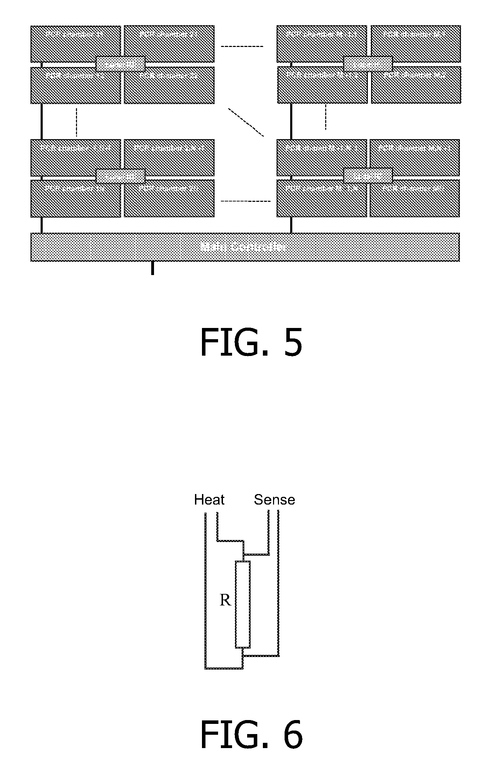

A further embodiment is a hybrid where there are local ICs that each multiplex a number of local chambers, e.g. PCR chambers, as shown in Fig. 5. Again similar functions are shown to those of Fig. 4. In this case the control is intermittent as it is multiplexed, rather than continuous, but the time interval between control inputs will be short compared to Fig. 2. This embodiment also has far fewer ICs than in Fig. 3 so that cost, yield and reliability will be improved. Another option is a modification to the system of Fig. 5 so that the local PCR chambers are driven or read in parallel without multiplexing, similar to the case of Fig. 3.

Following the set up of the Fig. 1 embodiment (LTPS only), the embodiments shown in Fig. 2 to Fig. 5 can each be implemented with the CMOS LTPS technology so that no ICs are required, but this will be more difficult as the LTPS silicon quality is lower than crystalline silicon and therefore high performance will be harder to achieve.

In the case of real-time PCR, where the presence of amplified products is quantitatively recorded real-time during temperature processing using reporter molecules (e.g. molecular beacons, scorpions, etc.) that generate an optical signal, one of the ICs may receive input from an external optical detection system and use that input to adjust the temperature control of one or multiple PCR chambers.

Figs. 6 to 21 Examples of chamber circuits

In these embodiments, chamber circuits in the form of heater and/or cooler and temperature sensors are shown, though other types of sensing, processing or control are included within the scope of the present invention. The sensor and heater and/or cooler are effectively (other than a thin electrically insulating layer) in contact with the bio-fluid. When this is done, accurate temperature control can be achieved. Wherever heater is mentioned it is also intended that a cooling element could be used either in addition or as a substitution therefore. A suitable cooling element can be Peltier element. There are a number of embodiments for the LTPS heater/sensor arrangement and Figs. 6-21 shows some examples.

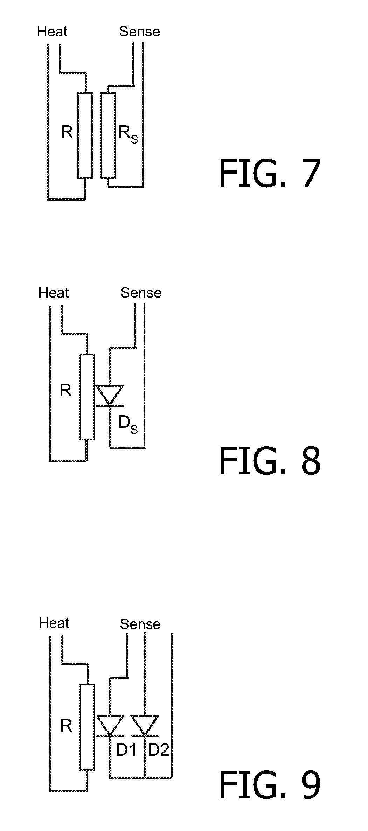

In Figs. 6-9 some arrangements are shown. In Fig. 6 there is a resistor R for heating and it also functions as a sensor. The voltage across it (which will change slightly with temperature) is sensed with a suitable sensing circuit and this provides a value related to temperature. In Fig. 7 there is a separate and different resistor Rs for sensing. These cases do not require LTPS. In Fig. 8 there is a diode Ds and a sensing and current drive circuit is provided to sense the anode voltage of the diode which is proportional to temperature when the sensing and current drive circuit drives the diode with a current. In Fig. 9 there are two diodes D1 and D2 and a different sensing and current drive circuit. The anode voltage difference between the two diodes is proportional to temperature when they are driven with the same current from the sensing and current drive circuit. The diodes D1 and D2 can also be in reverse bias in which case their leakage current is temperature sensitive. Hence, the sensing and current drive circuit can be adapted to reverse bias the diodes and to sense the leakage current of the diodes. The diodes could also be TFTs in diode arrangement, e.g. where extra wires are provided for gate control. The diodes can also be gated devices. These later embodiments can be implemented in LTPS.

In these embodiments all the chambers are wired directly to a controller IC rather than using multiplexed data or control lines shared between more than one chamber circuit. Hence these are suitable for the non-multiplexed architectures of Fig. 3 or the modified architecture of Fig. 5. These non-multiplexed examples are less preferred for a number of reasons:

1. If the number of chambers is large e.g. greater than 100, then the number of interconnects to the controller IC becomes large which will reduce the yield due to unreliability.
2. The IC size will become large because of the large number connections and the circuitry required to drive those connections therefore increasing the cost of the IC. The examples in Figs. 6-9 show an IC requiring at least 400 connections.
3. The supply of power to the heaters is done more efficiently at high voltage. High voltage ICs are larger and more expensive.
4. The power dissipation inside the IC is likely to be excessive.

The excessive power dissipation and connection count can be reduced by the embodiments of Figs. 4 and 5. The embodiment of Fig. 4 however is less preferred as large numbers of ICs bonded to the glass increase manufacturing difficulties with yield and reliability issues. Embodiments of Figs. 1, 2 and 5 are more preferred with only the embodiment of Fig. 5 being able to use the techniques described in Figs. 6-9 where no time based multiplexing is used.

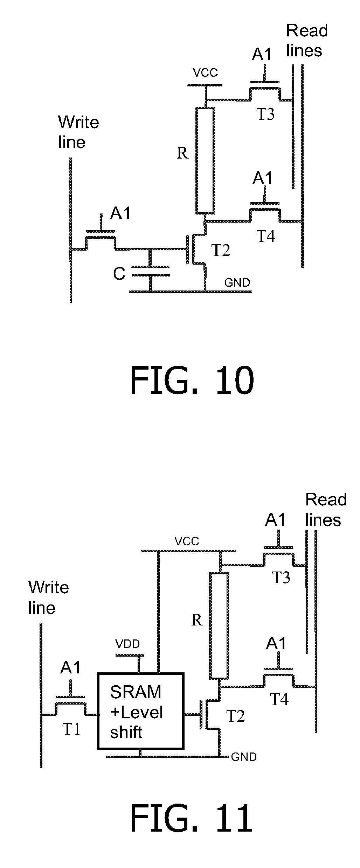

For the architecture of Fig. 2 where there is a single IC to time multiplex the chambers, e.g. PCR chambers, the embodiments shown in Figs. 10 to 17 can be used and these embodiments can overcome some or all of the disadvantages mentioned above. Fig. 1 also addresses these issues mentioned above but as stated elsewhere requires full integration using LTPS that can be more difficult.

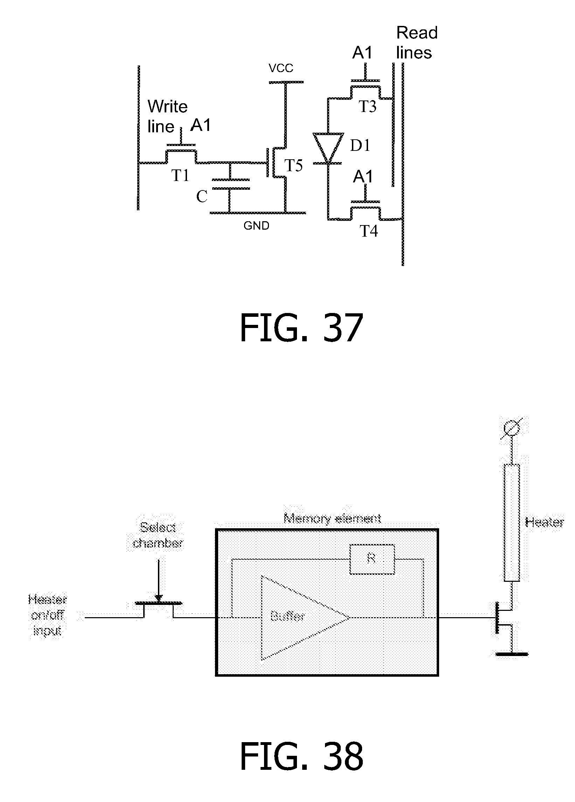

In Fig. 10 there is shown a DRAM-like embodiment where a voltage is stored on a storage means such as a capacitor at each chamber to hold the gate of the heater TFT either high or low. In Fig. 38 there is shown another example of a storage means, based on a buffer with feedback circuit, to hold the gate of a heater TFT either high or low. With reference to the case shown in Fig. 10, the heater element R is switched by switching means such as a transistor T2, which is in turn driven by a switching means such as transistor T1. This transistor T1 is coupled to a write line, which is a multiplexed control line from the controller. T1 is switched on by row select signal A1. The same resistor R is used for sensing and is coupled to read lines. Again the read lines are coupled from many chamber circuits to the controller and the controller is adapted to read these in a multiplex process. Row select signal A1 drives transistors switching elements such as transistors T3 and T4 to couple either end of this chamber circuit sensor to the read lines. This arrangement requires the write line to supply high voltages. It is possible to reduce this by adding a level shifter into the chamber drive circuit. This is shown in Fig. 11 in which the DRAM is also replaced by an SRAM so that signals can be held for longer time periods.

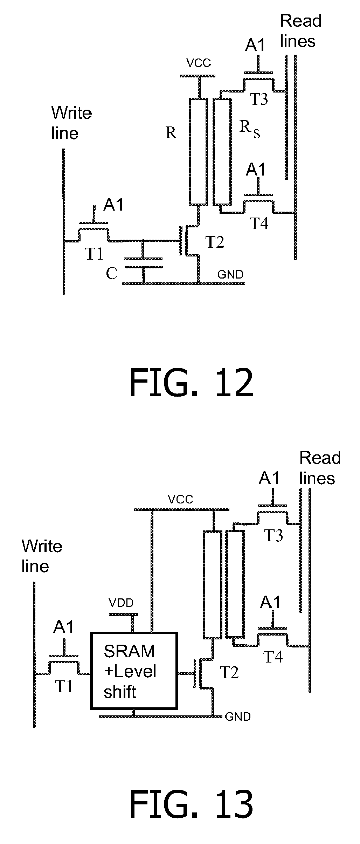

Temperature sensing can be achieved using the heater resistor itself as shown in Figs. 10-11. Temperature changes cause small changes in the resistance that can be measured via the read lines. The circuitry required to do this will need to be quite sensitive and is therefore placed preferably in the silicon controller IC. The reading should also take place when there is no heating so that the power supply lines have well defined values. This will require that the heating be momentarily switched off when a read measurement is made. In Figs. 12-13 this aspect is avoided by having a separate resistor as the sensor. This can take up more area and has more components, but can be simpler to control. Otherwise these Figures correspond to Figs. 10 and 11.

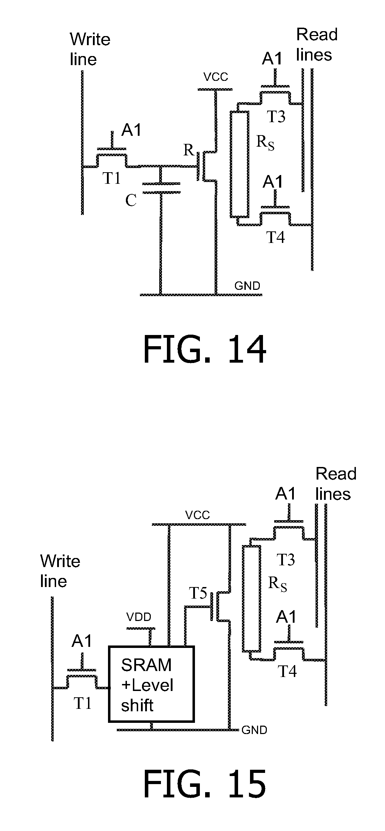

Another embodiment is shown in Figs. 14-15, which is similar to Figs. 12 and 13 but instead of a resistive heater element, a switching TFT can be used itself as the heater. However this approach has a disadvantage that the heating produced is likely to be quite non-uniform across the chamber. This may not matter for some applications, but in the case of PCR it can lead to inefficiencies in the PCR amplification process.

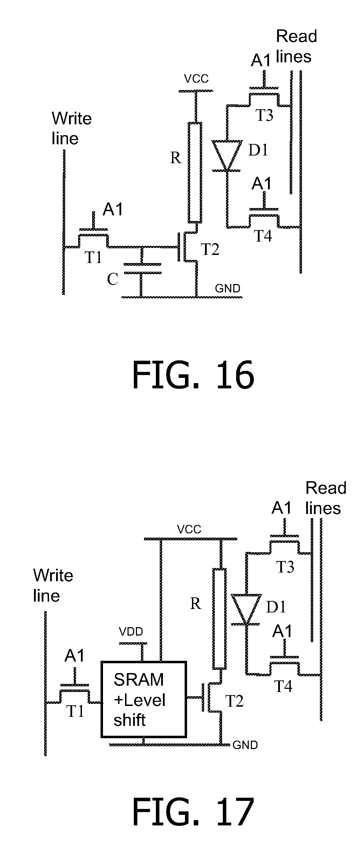

A further embodiment is shown in Figs. 16-17. The difference here is the use of a diode D1 as the temperature sensor. Otherwise these Figures correspond to Figs. 12 and 13. Lateral PIN diodes can be used, and can be made in a fairly standard LTPS process. When in forward bias as provided by a suitable drive circuit, the voltage across the diode is proportional to the temperature and can be sensed by a suitable sensing circuit. If two currents are switched into the diode at different times by means of a suitable drive circuit or circuits then the voltage difference across the diode as measured by a sensing circuit is proportional to temperature. Accordingly, some of the material constants of the diode are eliminated in the measurement, making a more reliable measurement. The controller IC or other local circuitry can control the currents switched into the diode from the read lines and also be adapted to make the sensitive voltage measurements of the anode of the diodes.

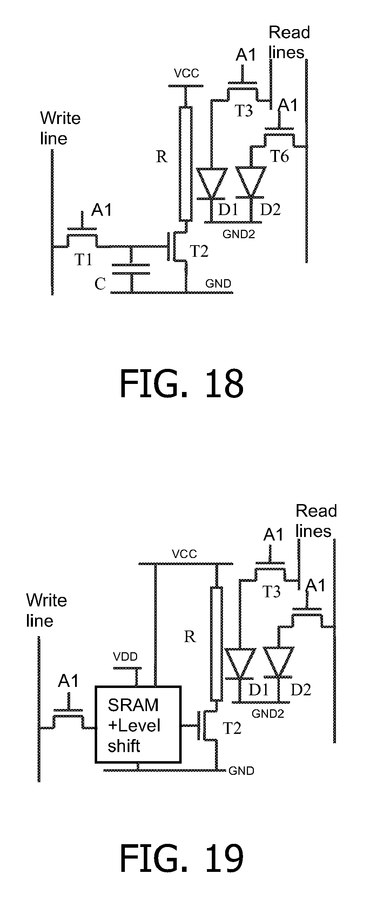

Figs. 18 and 19 show a variation on the diode approach, using two diodes D1, D2 of different sizes, each connected from a read line to ground. A first switching element such as transistor T3 connects a first diode D1 to a read line, and a second switching element such as transistor T6 connects the second diode to ground. Transistors T3 and T6 are driven by row select line A1. Otherwise these Figures correspond to Figs. 16 and 17. The same current is passed through each diode and the voltage difference between the anodes is again proportional to temperature which can be sensed by a sensing circuit.

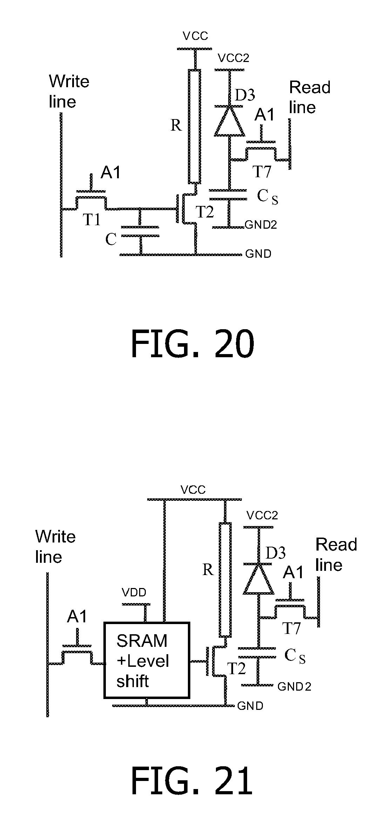

In a further variation shown in Figs. 20 and 21, there is a diode in reverse bias (which could alternatively be a diode connected TFT with negative drain-source voltage) as provided by a suitable drive circuit. The diode in reverse bias produces a leakage current to charge a capacitor Cs. The capacitor is coupled to a read line by a switching element such as transistor T7, controlled by a row select line A1. At regular intervals the controller IC can read the charge from the capacitor. As the leakage current is highly temperature sensitive the charge readout can be used as a representative value of the temperature or a change in temperature or a difference in temperature and this value can be used to control the heating.

A number of examples of multiplexed heater/sensor arrangement on an LTPS glass substrate have been shown in Figs. 10-21. They have the following advantages when compared to the schemes shown in Figs. 6-9.

1. The number of connections to an IC is more moderate e.g. for a 100 chamber PCR the number of connections to the IC is of the order 20 to 30. This will increase yield and reliability.
2. The circuitry inside the IC can be significantly smaller therefore the IC will be of lower cost.
3. The IC no longer needs to be high voltage, which will further reduce its area and therefore cost.
4. The IC no longer needs to act as the power supply for the heaters so the power density inside the IC will be more moderate.

The embodiments shown in Figs. 10-21 will result in several different implementations of the controller IC and these will be considered, but first the multiplexing issue will be discussed.

Fig. 22, Row Driver

The controller IC needs to multiplex between the different chambers such as PCR chambers and temperature should be controlled within each chamber as accurately as possible. To achieve this, fast scanning between chambers is preferred. In the diagrams of Figs. 10 to 21 all switches with gates are driven by a row select signal labeled A1. This is a signal to address one of many rows. It can be generated by a shift register, for example. Shift registers are easily implemented using LTPS technology and the clocking of the shift register can be implemented by a timing signal from the controller IC. Therefore, each row of chambers, e.g. PCR chambers can be accessed one after the other. Fig. 22 shows an example of a device having an array of chambers, e.g. a PCR chamber array; a row driver, and a controller IC, all on a substrate. The Figure shows a timing diagram, provided by a timing circuit, aligned with the rows of the row driver. This timing diagram shows timing of pulses each from a different output of the LTPS row driver (shift register). The pulses are active at different times one after another to select different ones of the rows of the array at different times. The PCR array is the array of chambers shown in Figs. 1 to 5. The repeat time will be the field time. The IC can control the row driver and writes data to the heater element and reads data from the sensor to enable heating control.

The device can be implemented using ICs bonded to the glass substrate using the chip-on-glass bonding technology used in the display industry. It is also possible to foil bond ICs to the glass. Other methods of attachment are included within the scope of the present invention.

The devices can be applied to any microfluidics applications. The present invention is notable for use in multiplexed PCR systems for rapid identification of DNA sequences. Besides molecular diagnostics, the present invention can also be applied to any device or micro-fluidic device comprising a thermal processing array or other types of fluid processing. This includes lab-on-a-chips that are used for so-called chemistry-on-a-chip. Suitable properties that can be sensed or modified include, but are not limited to, temperature; flow rate or velocity; pressure, fluid, sample or analyte presence or absence, concentration, amount, mobility, or distribution; an optical characteristic; a magnetic characteristic; an electrical characteristic; electric field strength, disposition, or polarity.

Figs. 23-26 digital chamber circuits

Multiplexed arrays of chambers such as PCR chambers are temperature controlled in accordance with some embodiments of the present invention using digitally controlled heaters with analogue sensors that perform analog to digital conversion (ADC) to give a time based digital output. The advantage of such a system is that the control system can be accurately implemented in the digital domain. When considering technologies such as LTPS or other low cost processing techniques already mentioned above such as aSi:H or nano-or microcrystalline techniques this kind of mixed signal processing can have many performance advantages.

Controlled heating provides functional capabilities, such as mixing, dissolution of solid reagents, lysing, thermal denaturation of proteins and nucleic acids and lysis of cells, elution of bound molecules, enhanced diffusion rates of molecules in the sample, and modification of surface binding coefficients. To enable accurate temperatures to be achieved, precise temperature control systems should be used. This means precision circuitry is needed.

LTPS Transistors (Thin-Film Transistors or TFTs) have a lower mobility and are non-uniform i.e. the characteristics of two devices close to one another will be different so that 'matched circuits' commonly used in crystalline technologies are not possible. This can reduce precision for a PCR temperature controller. This is particularly relevant when there are multiple independent PCR chambers on the chip as the TFT non-uniformities will cause random differences between the temperature control of the different PCR processes and this will causes differences in efficiencies, quantification (in the case of Q-PCR) or even failure of the process.

A glass substrate using LTPS technology can be used to provide electronic components for heating and sensing the temperature of an array of chambers on the substrate. In some embodiments the sensing is the only analog part of the system and a simple 1-bit ADC can be used to convert the sensor output into a time domain 1 bit signal where the pulse width is a value that represents the temperature. The reminder of the control system and the heating can be performed using digital logic which will enable the issues of poor TFTs to be substantially overcome.

A multiplexed system, e.g. a PCR system, is shown in Fig. 1. It is desirable to have few inputs to the system to enable a low interconnect count to the PCR system causing yields and reliability to be higher. Therefore a highly integrated system is desirable. The controller and row logic enable the array of chambers, e.g. PCR chambers to be controlled with a minimal amount of digital logic in the PCR chamber area. This is advantageous because not only is LTPS a poor transistor technology (having however a big cost advantage) it also has large feature size and design rules that are along way from what is currently available is crystalline CMOS technologies, e.g. gate lengths of 4micron compared to 40nm. However the large area required for the PCR chambers means that significant area can be afforded for the implementation of digital logic.

The heaters in this system can be controlled in a Pulse Width Modulation (PWM) manner to avoid substantial power losses in the heater driver TFT. Therefore a digital system that performs the control is preferred.

The system architecture can be as shown in any of Figs. 1 to 5. For digital control of the chamber circuits, the row logic can additionally contain a series of counters whose outputs are fed to the chambers on each row to control the heating and sensing functions, as will be explained.

The temperature sensor can be one of the few analog parts of the system, so as to minimize difficulties with non-uniformities. There are a number of possible implementations that could be used for the temperature sensing elements, but in this embodiment, shown in Fig. 23, the reverse bias leakage current of a TFT/diode or gated diode is used. A PTAT temperature sensor is another example. The TFT T8 has its base coupled to its source or drain to act as a diode, and outputs analog signals indicating fluid temperature to a capacitor Cs via a cascade transistor Tc. The gate of transistor Tc is driven by an amplifier 20 fed from the gate of the transistor T8. A reset circuit having a reset switch is provided for resetting the capacitor. The voltage across the capacitor is fed to an ADC which acts as a 1-bit converter. The capacitor and ADC are an example of signal converters for converting the analog signals to digital read signals. Other examples can be envisaged. The 1-bit signal is fed to a clock input of a latch. The input of the latch is fed from a digital counter and the clocked output of the latch is fed onto a read line, in this case a multi-bit digital line. The circuitry of Fig. 23 can be implemented largely as thin film transistors using low temperature polysilicon, and can be integrated on the same substrate as the chambers. If implemented on separate substrates bonded to together, more interconnections would be needed.

The operation is as follows:

- The reset voltage is applied to the capacitor via the reset switch.
- The diode connected TFT temperature sensor leaks current via the cascode TFT to the capacitor and starts to charge it up.
- The cascode TFT Tc will keep an approximately constant voltage across the sensor, if the op-amp is included then it will force a constant voltage to be dropped across the sensor.
- As the capacitor charges it will eventually reach the switch point of the ADC.
- The ADC converts the analogue voltage on the capacitor and converts it to a high or low value depending upon a reference voltage in the ADC. The system is effectively a comparator. This will have offsets due to the TFT non-uniformity can therefore compensation will be required. A system calibration could be performed or a standard offset cancellation using a switched capacitor arrangement.

- The D input of the latch comes from a counter that is started when the reset voltage is loaded.
- Therefore the latch stores the time it takes the capacitor to charge from the reset voltage to the switch point of the inverter.
- The result can be read from the chamber at any time via the digital read bus by operating the transmission gates (TG) appropriately.

The use of the amplifier 20 to control the cascode TFT Tc is in its own right a novel aspect of the present invention that may be used independently of other features. It enables the voltage across the diode connected TFT temperature sensor to be held at a constant voltage, regardless of the fact that the source of the cascode TFT is moving thorough a large voltage as the capacitor charges. The bias voltage on the amplifier can be used as a control for the temperature sensor i.e. it enables us to alter the voltage across it and therefore slightly modify its current output (i.e. the sensor is not a perfect current source). This may be useful for calibration purposes.

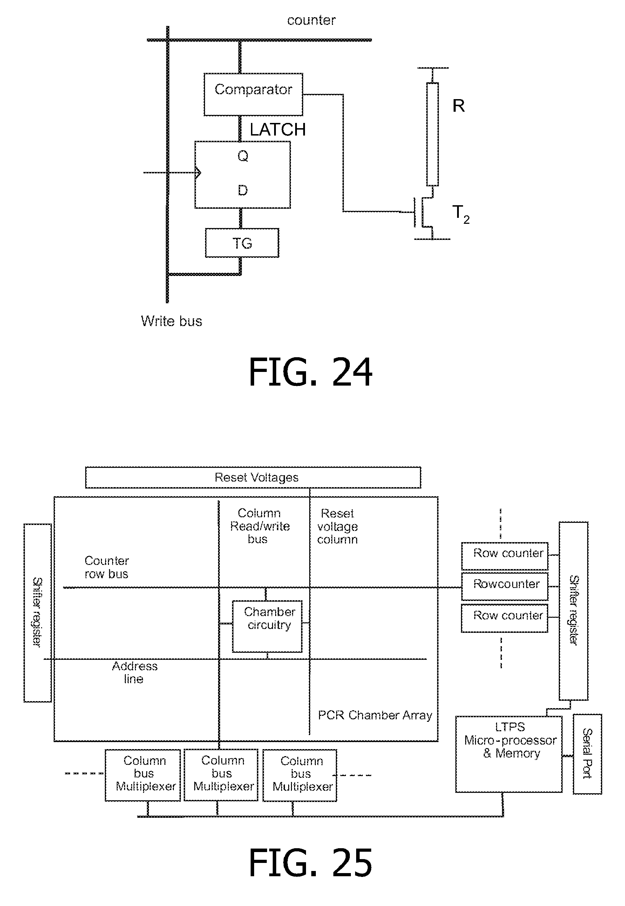

An example of a digitally controlled chamber heater is shown in Fig. 24. A heating element R is switched by a switching element such as transistor T2. This is controlled by the output of a comparator. The comparator compares a counter value with a latched value in a DQ latch fed from a write line in the form of a digital bus from the controller. The operation is described as follows:

- The heater is required to operate on a PWM basis.
- At the write time data is loaded via transmission gates TG from the write bus into the DQ latch.
- The output of the latch is fed to a digital comparator whose second input is the counter input.
- When the counter surpasses the Q data the comparator output goes low to turn off the heater.

The overall system is shown in Fig. 25. This can be based on a system of any of Figs. 1 to 5 with added features. An array of chambers is provided on a substrate. Each chamber has its own chamber circuit. The row driver is indicated by the shifter register at the left hand side. The controller is indicated by the LTPS microprocessor and memory, and by the column bus multiplexers. The column multiplexers control a column read/write bus. Additionally there are reset voltage providers at the top of the view, outputting reset voltages for each column. Row counters driven by another shifter register are shown at the right hand side of the view. These provide counter values to a counter row bus. The various functions are described in the following points.

- Row counters

  - These have a width and clock frequency sufficient to enable the division of the frame period into time periods small enough to enable accurate temperature control.
  - These are reset by the shift register which operates at line frequency.

Therefore each counter is offset in time by a line period.
- Microprocessor

  - This implements the control algorithm. It typically has memory and a communications interface such as a serial interface for example to external devices.
  - It operates at a reasonably high frequency so that all PCR chambers can be serviced within a field period.

- Column Multiplexers

  - These will have memory so that read and write values can be stored for transfer between the processor and the chamber.

- Reset and bias voltage generators

  - These will be analogue components requiring DACs. They can be used to tune each chamber.

- Shift register

  - Simply required to address each row of chambers for read/write.

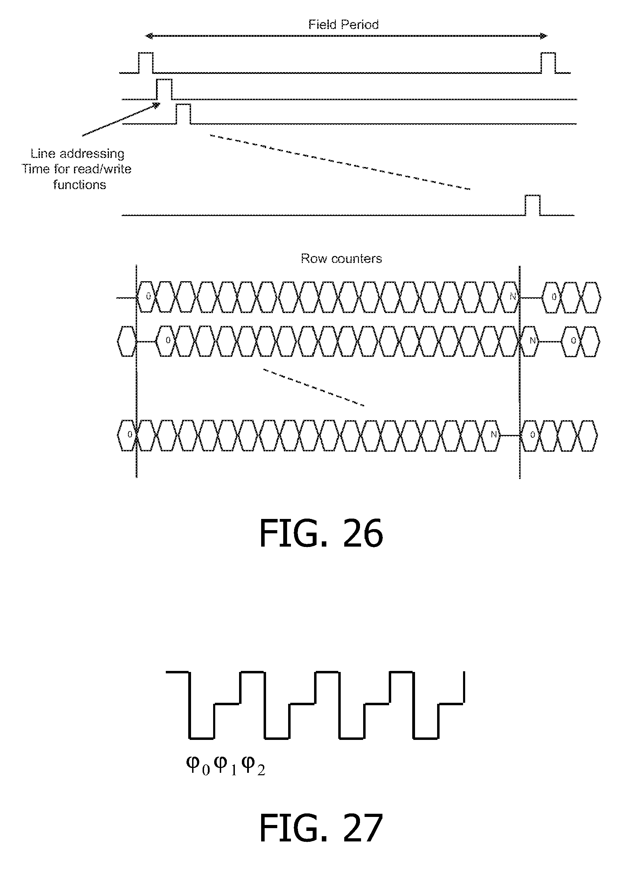

In Fig. 26 a timing diagram as supplied by a timing circuit for the addressing of the chambers and the row counters is shown. The row counter divides the field period into N+1 sections and this may be different to the number of rows of chambers in the system. Note that the field period will be a time very much shorter than the thermal time constant of the PCR system, for example the field period might be 1ms and the thermal time constant might be 1s. The division of the field period into time periods may require 10-bit accuracy, therefore the counter will need to be clocked 1024 times within 1ms i.e. a frequency of just over 1MHz. This is achievable with LTPS technology, though other technologies can be used, as has been described above with respect to Figs. 2 to 5, particularly if faster processing is needed.

The microprocessor implements a digital control algorithm for each chamber independently. The control algorithm is now outlined. For proportional control the following algorithm could be used:

$$T_{HEAT}(i+1) = G(T_{REF} - T_{SENSE}(i))$$

The time step is given by $i$ and the proportional gain coefficient is G. $T_{SENSE}$ is the sensor output time and $T_{HEAT}$ is the heater time. $T_{REF}$ is the desired sensor output time which defines the desired temperature. Calibration can be used to relate a temperature to each sensor time. The heater is one time period behind the sensor, as the heater cannot be updated until there is a reading from the sensor.

Proportional control systems will result in errors in the temperature control because of the system heat losses. Therefore proportional integral (PI) control systems are often preferred as are proportional integral differential (PID) control systems. Here is a simple implementation for a digital PI control.

$$T_{HP}(i+1) = G_P(T_{REF} - T_{SENSE}(i))$$

$$T_{HI}(i+1) = G_I(T_{REF} - T_{SENSE}(i)) + T_{HI}(i)$$

$$T_{HEAT}(i+1) = T_{HP}(i+1) + T_{HI}(i+1)$$

The gain coefficients for the proportional and integral parts are $G_P$ and $G_I$ respectively. As the system reaches a stable point i.e. $T_{REF} = T_{SENSE}$ then the heater output is a non-zero constant that enables the system heat losses to be overcome.

Figs. 27- 30 Reduced peak power for matrix based LTPS systems

Multiplexed arrays of chambers such as PCR chambers using LTPS technology will require significant power to operate. An issue will then be how well the technology can support this power. Peak power consumption could be an issue for array based PCR devices. The metal power supplies in any glass substrate technology may struggle to supply the power without large voltage drops resulting in poor precision of temperature sensing and control circuits. Therefore, to reduce peak power the PCR cycle and/or phase can be varied. Reducing peak power consumption in multiplexed arrays of PCR chambers is described as follows. Driving the parallel PCR cycles out of phase reduces the number of concurrently heated chambers.

Reducing peak power consumption can involve ensuring that the heating cycles, e.g. PCR cycles of adjacent chambers are out of phase or that the rising temperature edges of different chambers are out of phase or that the lengths of the temperature phases are varied between chambers. This can be applied to any of the embodiments described, including the multiplexed PCR system shown in Figs. 1 to 5.

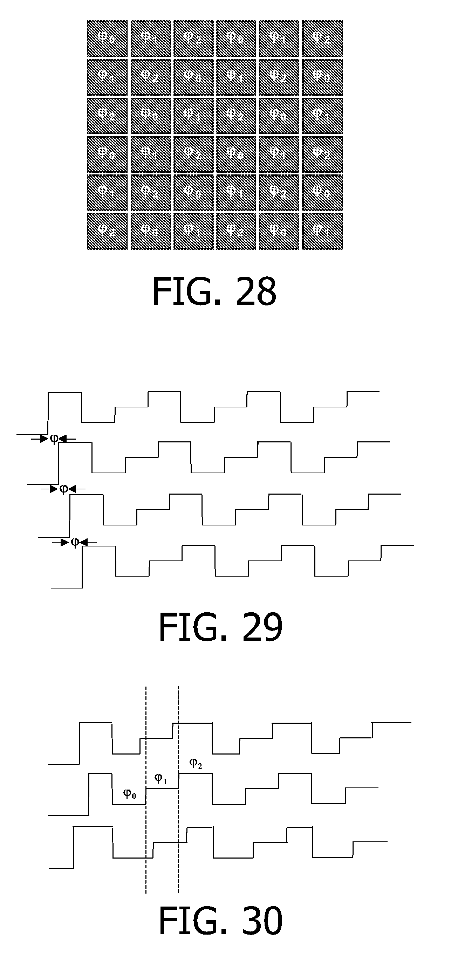

Figs. 27, 28 Embodiment 1 - Mapping of PCR cycle phases within an array

Fig. 27 shows the temperature cycling phases of an example PCR, involving a low temperature φ0, a medium

temperature φ1 and a higher temperature phase φ2. The maximum power consumption will occur if all chambers in the array experience the same cycle at the same time i.e. cycle φ2, the highest temperature phase. To avoid this the temperature cycling in the array should be arranged so that the minimum number of φ2 temperature phases are occurring at any one time. The sequence shown in Fig. 28 will enable this. This shows a first row starting with phase 0, then going to phase 1, then phase 2, and repeating this. A second row starts with phase 1, then 2, then 0 and repeats. A third row starts with phase 2, then 0, then 1, and repeats. Note that the temperature in each chamber can be different even if the cycle phase is the same i.e. small variations in the temperature are allowed to enable the benefits of multiplexed PCR, qPCR, real-time PCR to be realized. At a given instant the maximum number of phases φ2 is approximately one third of the total number of chambers in the array which will reduce the peak power significantly and keep the overall power consumption at a fairly constant level.

Fig. 29 Embodiment 2 - Phase shifting of PCR temperature cycles

Maximum electrical power consumption will occur when the temperature is required to rise, as the controller realizes it must change to a higher temperature maximum power in consumed until the target temperature is approached. Therefore by offsetting the phases of the PCR cycles of each chamber, again the peak power is reduced. Fig. 29 illustrates the procedure. The phase offset can be optimized to achieve the lowest peak power consumption for a given configuration of PCR chambers. If there is a row or column of chambers connected to the same power supply line then it is desirable to protect that line from large voltage drops that may occur with high peak powers. Then the chambers in that column or row should be offset in phase as shown in Fig. 29.
If the number of chambers within one row or column is N then the period of one temperature phase is divided by N and this will represent the phase shift required to avoid rising edges occurring at the same point in time.

Fig. 30, Embodiment 3 -Altering PCR phase lengths

The phase lengths can also be altered to a certain degree as long as they do not interfere with the biological processes. Fig. 30 shows possible waveforms of neighboring chambers. The duration of the highest temperature is shortened in one cycle, and lengthened in another cycle. This is arranged so that for a given chamber the average duration over a number of cycles is not changed. For a given point in time, one chamber (top waveform) has a longer high temperature duration. The middle waveform has an unchanged duration and the lower waveform has a shorter duration. Notice how the lengths of the phases φ0, φ1 and φ2 can vary but the period of the temperature cycling remains constant so that all PCR chambers finish at approximately the same time.

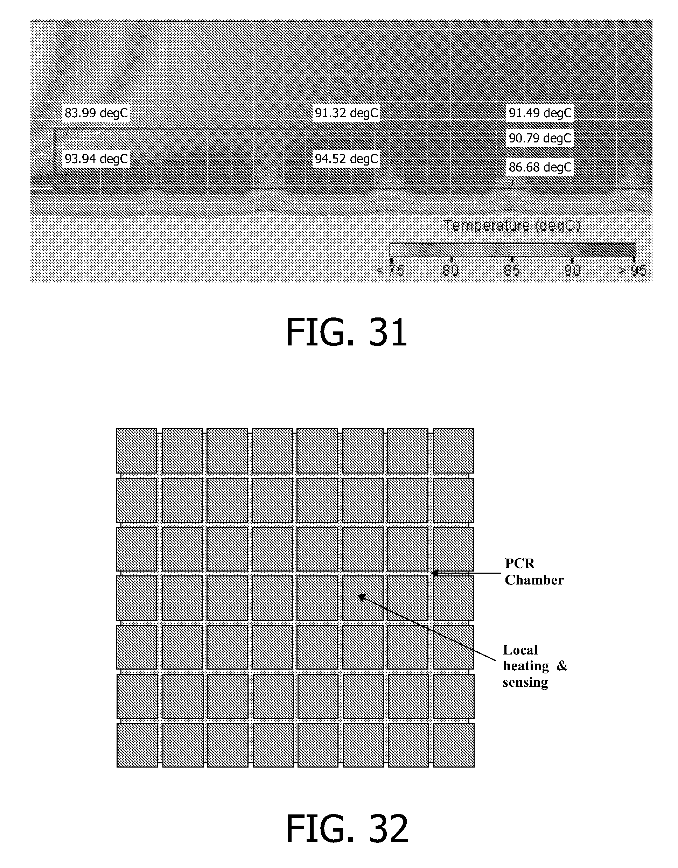

Figs. 31- 37 Local heating control within a PCR chamber

One serious issue is that heating from thin film metals on an insulating substrate such as a glass substrate can produce non-uniformity in the heating profiles and this can reduce the efficiency of the PCR process. The performance of PCR is linked directly to the accuracy with which the required temperature cycles can be obtained. Simulation of heating profiles shows this to be non-uniform across a PCR chamber. Fig. 31 shows an example of a temperature profile, showing notable variations in temperature at different parts of a chamber. A local heating control system can reduce or overcome these non-uniformities, e.g. by using LTPS technology, and can be applied to any of the embodiments described above, including those shown in Figs. 1 to 5. Notably it can provide increased power at lower voltages enabling easier control of TFT stability. Simpler systems can have circular chambers enabling a radial (i.e. 1D rather 2D) array of heaters and sensors. TFT only heaters avoiding power wastage are also described.
In a single PCR chamber formed using a glass substrate and with LTPS technology a scheme for local heating control is provided that enables uniform temperature profiles and hence efficiency PCR processes.

Figs. 32-34, Embodiment 1 - Increased power at lower voltages

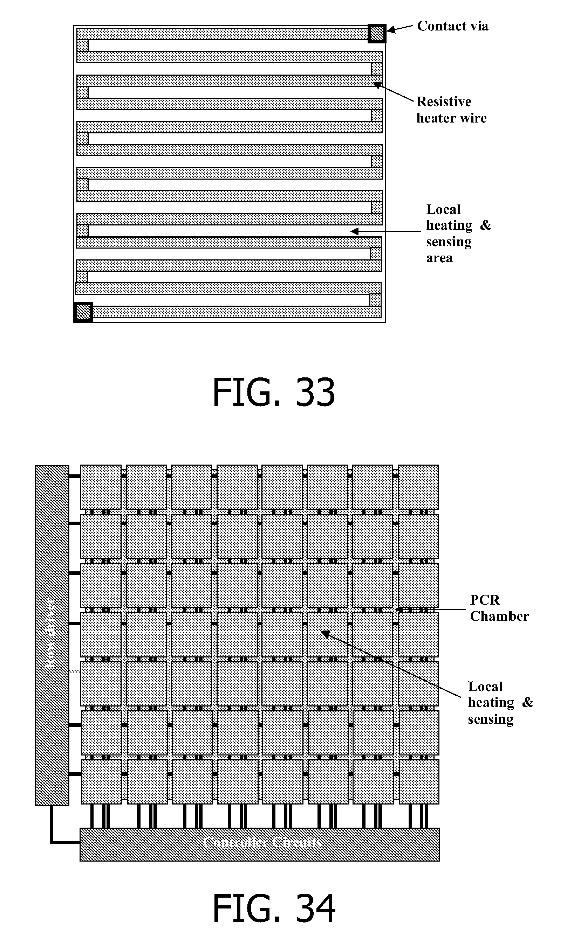

The chamber, e.g. PCR chamber is divided into regions for local heating. This chamber could be divided on a regular grid of squares as shown in Fig. 32. An example could be a PCR chamber of 7mm by 7mm is divided into 50 by 50 regions of 140micron x 140 micron each. A heater element is included in each region as well as a sensor. Data from the local sensor is used to control the local heater element. More complex algorithms may be used that allow for heat transfer from neighboring regions. An example of a local heater element is shown in Fig. 33. This shows a contact via at top right and lower left corners. A resistive heater wire snakes backwards and forwards across the chamber on its way between the vias, to cover the entire area with only small gaps. The heater element for some applications should be transparent to enable optical sensing such as sensing of fluorescence through the transparent substrate such as a glass substrate and it should occur above the transistor layers so that it can fill the region completely. A suitable transparent conductive material is ITO that can be included in standard LTPS processing technology and can be located above the transistor layers.

In an example the heater element is 5 micron wide (with a 5 micron gap) and 1915 micron long giving 383 squares. The resistance per unit square of ITO can be up to 100 Ω/ giving a total resistance of nearly 40kΩ. Higher or lower resistances can be obtained by altering the dimensions of the heater elements.

A chamber circuit such as the one shown in Fig. 16 or other similar Figures can be used for each of the local heaters and sensors. In the heater circuit the transistor should be sufficiently large that it's on-resistance is much less than the heater element resistance. This can be achieved with LTPS technology using a TFT with a W/L of about 25 that will easily fit within the local heater region.

A controller circuit can operate in a multiplexed manner to control a column of local heater/sensors, as has been described above, in relation to Figs. 1 to 26, but instead of controlling a heater for an entire chamber, they can control a number of local heaters. The update will need to be sufficiently rapid that any overshoots in temperature due to periods of non-control in the region of a particular heater are very small. As described above, one or more separate ICs can be used for the controller.

Another consequence of this approach (beyond having local control that deals with the temperature variation shown in Fig. 31) is that the power supplied to the PCR chamber can be greater and can be done at lower voltages enabling simpler LTPS circuitry. As an illustration, assume 15V power supply for the heater, then a 50x50 40kΩ resistors give a total resistance of 16Ω's. At 15V this delivers 14W. This provides more controllable power that a 20V power supply with at total resistance of 50Ω using a single heater for the whole PCR chamber delivering 8W. There are also power supply lines running across the chamber that will need to carry significant current. It is possible to estimate that small voltage drops < 0.5V will occur on these lines. This will alter the power supplied locally, but as the system is a controlled the effect is compensated.

Fig. 34 shows an example of an architecture having a single chamber. This could be a single chamber of a larger device having multiple chambers as shown in Figs. 1 to 5, and can be incorporated into any of the embodiments described above. A regular grid of square shaped local heating and sensing parts is shown. A row driver provides row select signals, and controller circuits provide column select, and read or write lines to the local heating and sensing parts.

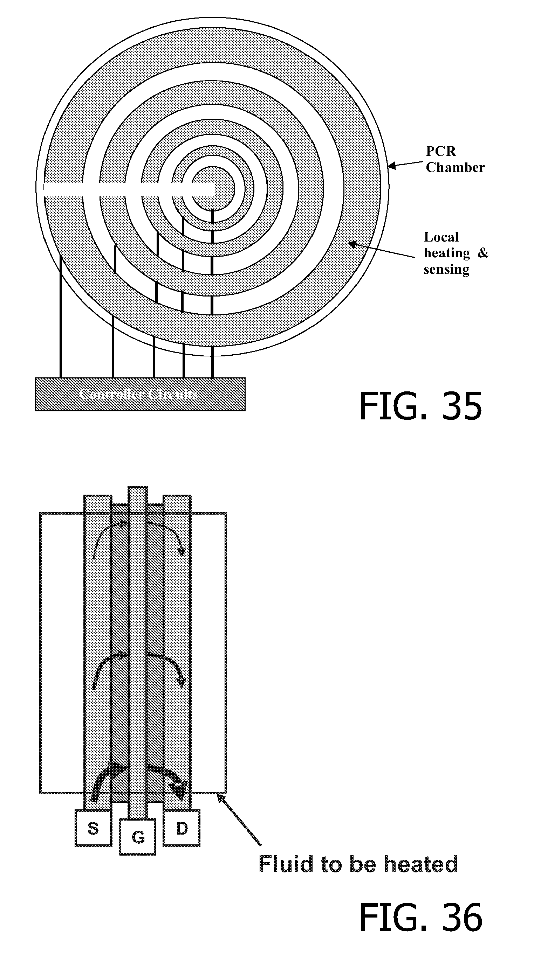

Fig. 35 Embodiment 2 - Circular Chambers and Circular Heaters/Sensors

A circular chamber has a much higher degree of symmetry than a rectangular chamber. Therefore heating losses at the edges of the array will be circularly symmetric and this will enable a simpler scheme for local heating and control. Further when the heat loss is determined by surface area, a cylindrical chamber has a lower surface area that a rectangular one. In one embodiment a one dimensional (radial) array of controllers or a the two dimensional rectangular array of controllers can be used. A one dimensional (radial) array of controllers will enable updates from a controller of the individual heaters to be performed at a much higher rate (as there are far fewer to update) that can result in a more accurate control or reduced cost.

Fig. 35 shows an arrangement of heater resistors for a circular chamber. This could be used with the chamber circuit for heating and sensing as shown in Fig. 16 or similar Figures. Note that in comparison to Fig. 16 there is no longer any row driver required and the controller block can be smaller. The controller can also work continuously on a given heater sensor combination enabling accurate control whereas in Fig. 16 control is only exercised once per field period which may cause temperatures to drift. Again the features of Fig. 35 can be incorporated into any of the embodiments described above.

Figs. 36, 37 Embodiment 3 - TFT only heaters

The use of a TFT acting as a heater by itself has been avoided up to now due to the temperature variations that can be caused with very large TFTs. The issue is that the TFT will stretch across the 7mm width of the PCR chamber therefore the drain and source regions of the TFT will be very long and narrow. These will also need to carry high currents, therefore voltage drops will occur in the drain and source regions. This will vary the gate-source voltage of the TFT across the length of the TFT therefore the power developed by the TFT will vary along its length and give poor PCR efficiencies. Therefore resistors have been used and these are switched on an off with a switching element such as a TFT to control power. A resistor will (assuming its characteristics don't change over its length) supply power uniformly over its length but some power will be lost in the switching TFT that controls it.

Fig. 36 shows a TFT having source (S), gate (G) and drain (D) regions with respective contacts at the bottom of the view. A channel region is below the gate, in between the source and drain regions. Thick arrows show current flow from source to drain. The resistance in the source will mean that the gate source voltage controlling the current will be larger nearer the source contact. Therefore the current will be larger. Thinner arrows away from the contacts represent lower currents. Also in the geometry shown the drain source voltage will be largest near the source contact. Therefore power density will be highest near the source so there will be non-uniform heating.

However, with local heating control the TFT only approach can be used because individual heater TFTs will be much smaller, supply less current and therefore will suffer less from the issues described above. Also power will not be wasted in a switching TFT.

Fig. 37 illustrates an example of a chamber circuit for heating and sensing, making use of a TFT T5 as one of many heater elements for the chamber. The gate of the TFT is controlled by a write line through a switching element such as transistor T1. T1 is controlled by row select line A1. A capacitor C is provided for holding the voltage on the gate of transistor T2, after transistor T1 has switched off. The sensor shown is a diode D1 but this could be a resistor, TFT or any other suitable temperature sensor. Switching elements such as transistors T3 and T4 are provided for switching the sensor circuitry onto the multiplexed read lines leading to the controller. Alternative circuits with a TFT T5 are shown in Figs. 14 and 15, described above.

Other variations and applications are conceivable within the scope of the attached claims.

**Claims**

1. An integrated microfluidic device having a substrate, a plurality of chambers (11-MN) on the substrate for handling fluids, a chamber circuit (R, Rs, D1, T1, T2, T3, T4) integrated on the substrate local to an associated one of the chambers for switching signals related to that chamber, and an integrated circuit chip bonded to the substrate, the integrated circuit chip having signal processing circuitry (controller) coupled to the chamber circuit.

2. The device of claim 1, the substrate comprising a transparent substrate.

3. The device of claim 1 or 2, the chamber circuit comprising thin film transistors.

4. The device of claim 3, the chamber circuit comprising polycrystalline, microcrystalline, nanocrystalline or amorphous semiconductor material and the integrated circuit chip comprising monocrystalline semiconductor material.

5. The device of any preceding claim, having more than one chamber circuit, and having a multiplexed line for coupling the chamber circuits to the signal processing circuitry, the signal processing circuitry being arranged to process signals from or for the chambers in a multiplexed manner.

6. The device of any preceding claim, the chamber circuit comprising temperature sensing circuitry (Rs, D1) for sensing temperature of the fluid in the chamber.

7. The device of any preceding claim, the chamber circuit comprising an electrical heating element (R) for heating fluid in the chamber and switching circuitry (T1, T2) for controlling the heating element.

8. The device of claim 7 when dependent on claims 5 and 6, the integrated circuit having a controller arranged to send control signals to the switching circuitry according to readings from the temperature sensing circuitry.

9. The device of any preceding claim, having more than one of the integrated circuit chips, each coupled to one or more chamber circuit.

10. The device of claim 9 having a main controller integrated circuit coupled to the integrated circuit chips.

11. The device of any preceding claim, comprising a two-dimensional array of the chambers, and associated chamber circuits comprising an active matrix of switches (T2), row select lines and control lines such that each of the switches is controlled by one select line and one control line.

12. The device of claim 11, having a row driver for activating different ones of the select lines in a sequence.

13. The device of claim 11 or 12, having one or more multiplexed read lines, and switches (T3, T4) for controlling which chamber circuits are coupled to the read lines.

14. The device of any of claims 11 to 13, wherein a storage device (C, SRAM) is provided for storing a control signal supplied to one of the switches (T2).

FIG. 1

FIG. 2

FIG. 3

FIG. 4

FIG. 5

FIG. 6

Heat    Sense

R    R_S

FIG. 7

Heat    Sense

R    D_S

FIG. 8

Heat    Sense

R    D1  D2

FIG. 9

Read
lines

A1

VCC

T3

Write
line

R

A1

A1

T4

T2

C

GND

## FIG. 10

Read
lines

A1

VCC

T3

Write
line

R

VDD

A1

A1

T1

SRAM
+Level
shift

T2

T4

GND

## FIG. 11

FIG. 12

FIG. 13

# FIG. 14

# FIG. 15

## FIG. 16

## FIG. 17

FIG. 18

FIG. 19

**FIG. 20**

**FIG. 21**

# FIG. 22

# FIG. 23

counter

Comparator

LATCH

Q

D

TG

R

T$_2$

Write bus

# FIG. 24

Reset Voltages

Column Read/write bus

Reset voltage column

Counter row bus

Shifter register

Row counter

Rowcounter

Row counter

Shifter register

Chamber circuitry

Address line

PCR Chamber Array

LTPS Micro-processor & Memory

Serial Port

Column bus Multiplexer

Column bus Multiplexer

Column bus Multiplexer

# FIG. 25

Field Period

Line addressing
Time for read/write
functions

Row counters

0  N  0  0

0  N  0

0  N  0

## FIG. 26

$\varphi_0 \varphi_1 \varphi_2$

## FIG. 27

FIG. 28

FIG. 29

FIG. 30

FIG. 31

FIG. 32

Contact via

Resistive heater wire

Local heating & sensing area

# FIG. 33

PCR Chamber

Local heating & sensing

# FIG. 34

PCR
Chamber

Local
heating &
sensing

Controller Circuit

FIG. 35

S   G   D

Fluid to be heated

FIG. 36

FIG. 37

FIG. 38

**European Patent Office**

**EUROPEAN SEARCH REPORT**

Application Number

EP 07 10 4822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 632 400 B1 (BRENNEN REID A [US] ET AL) 14 October 2003 (2003-10-14) * column 1, line 38 - line 52; figure 1 * | 1,2,5,6 | INV. B01L3/00 B01L7/00 |
| Y | * column 2, line 30 - column 4, line 22 * * column 1, line 6 - line 8 * | 3,4,7-14 | |
| X | US 2004/087008 A1 (SCHEMBRI CAROL T [US]) 6 May 2004 (2004-05-06) | 1,2,5,6 | |
| Y | * paragraphs [0117] - [0120], [0167] * | 3,4,7-14 | |
| Y | EP 1 304 388 A (AFFYMETRIX INC [US]) 23 April 2003 (2003-04-23) * paragraphs [0131] - [0133] * | 1-14 | |
| Y | DE 103 29 820 B3 (UNIV DRESDEN TECH [DE]) 13 January 2005 (2005-01-13) | 3-5, 11-14 | |
| A | * paragraphs [0011] - [0013], [0016], [0018]; figures 1,4,5 * | 1,2,5 | |
| Y | US 6 355 491 B1 (ZHOU YUXIANG [CN] ET AL) 12 March 2002 (2002-03-12) * column 13, line 29 - column 15, line 17; figures 10,11 * | 2-4, 11-14 | TECHNICAL FIELDS SEARCHED (IPC) B01L B01J |
| Y | US 2002/150683 A1 (TROIAN SANDRA M [US] ET AL) 17 October 2002 (2002-10-17) * paragraph [0065]; figures 2,3 * | 1,3,6-14 | |

The present search report has been drawn up for all claims

| Place of search | Date of completion of the search | Examiner |
|---|---|---|
| Munich | 2 August 2007 | de Biasio, Arnaldo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## EP 1 974 816 A1

### ANNEX TO THE EUROPEAN SEARCH REPORT
### ON EUROPEAN PATENT APPLICATION NO.

EP 07 10 4822

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2007

| Patent document cited in search report | | Publication date | Patent family member(s) | | Publication date |
|---|---|---|---|---|---|
| US 6632400 | B1 | 14-10-2003 | DE | 10122133 A1 | 10-01-2002 |
| US 2004087008 | A1 | 06-05-2004 | EP | 1415710 A1 | 06-05-2004 |
| | | | JP | 2004163427 A | 10-06-2004 |
| EP 1304388 | A | 23-04-2003 | NONE | | |
| DE 10329820 | B3 | 13-01-2005 | NONE | | |
| US 6355491 | B1 | 12-03-2002 | AU | 6045799 A | 04-10-2000 |
| | | | CA | 2367698 A1 | 21-09-2000 |
| | | | CN | 1267089 A | 20-09-2000 |
| | | | EP | 1207959 A1 | 29-05-2002 |
| | | | IL | 145459 A | 25-07-2005 |
| | | | JP | 2003521674 T | 15-07-2003 |
| | | | WO | 0054882 A1 | 21-09-2000 |
| US 2002150683 | A1 | 17-10-2002 | NONE | | |

EPO FORM P0459

For more details about this annex : see Official Journal of the European Patent Office, No. 12/82

35

**EP 1 974 816 A1**

## REFERENCES CITED IN THE DESCRIPTION

### Patent documents cited in the description

- US 20030008286 A
- US 6632400 B